# FASCICULE DE BREVET EUROPEEN

(11) **EP 2 098 762 B1**
(45) Date de publication et mention de la délivrance du brevet: **13.04.2011**
(21) Numéro de dépôt: 09305178.7
(22) Date de dépôt: 27.02.2009
(51) Int. Cl.: F16H 61/32

(54) **Actionneur électromécanique pour boîte de vitesses automatique comprenant un compensateur d'efforts**
Elektromechanisches Stellglied für Automatikgetriebe, das einen Belastungskompensator umfasst
Electromechanical actuator for automatic gearbox comprising an effort controller

(30) Priorité: 03.03.2008 FR 0851354
(43) Date de publication de la demande: 09.09.2009
(73) Titulaire: Renault s.a.s., 92100 Boulogne-Billancourt (FR)
(72) Inventeur: Raoul, Michel, 78990, Elancourt (FR)

(56) Documents cités:
- EP-A- 1 318 335
- EP-A- 1 850 037
- FR-A- 2 785 659
- GB-A- 2 293 427

## Description

La présente invention concerne un actionneur électromécanique, pour boîte de vitesses automatique.

Plus précisément, elle a pour objet un actionneur électromécanique pour boîte de vitesses automatique, comportant un moteur d'actionnement qui commande, par l'intermédiaire d'un étage de réduction de sa vitesse de rotation, le déplacement d'un organe d'actionnement de plusieurs organes internes de la boîte de vitesse, et des moyens de sélection aptes à positionner l'organe d'actionnement dans plusieurs positions de fonctionnement.

Une application particulièrement intéressante de l'invention se trouve dans les boîtes de vitesses automatiques ou automatisées, dans lesquelles les manoeuvres d'un embrayage d'entrée, et les opérations de passage des vitesses, sont réalisés par des actionneurs contrôlés par un calculateur embarqué à bord du véhicule. Sont concernées en particulier, les boîtes de vitesses automatiques ou automatisées, à passages sous couple.

On connaît dans l'état de la technique, des actionneurs électromécaniques pour boîtes de vitesses automatisées. La publication EP 1 318 335 décrit notamment une boîte de vitesses robotisée à passages sous couple, pourvue d'actionneurs électromécaniques comprenant toutes les caractéristiques du préambule de la revendication 1, dont l'un présente un organe d'actionnement sous la forme d'un doigt d'actionnement. Ce doigt commande, par l'intermédiaire de crabots, le déplacement de fourchettes commandant respectivement la manoeuvre de coupleurs coniques de passage de vitesses auto-assistés, et celle d'un embrayage d'entrée.

Les coupleurs coniques auto-assistés, sont ouverts par défaut en position de repos. Pendant la synchronisation des rapports, ils doivent transmettre un effort permanent. Une certaine progressivité de la montée en effort est cependant nécessaire, si bien qu'ils sont pilotés de préférence en effort.

En revanche, le pilotage d'un embrayage d'entrée, qui possède ses propres moyens de progressivité, peut être effectué en position : alors que la mise en action d'un coupleur auto-assisté requiert un ressort intercalé dans la chaîne cinématique de commande pour obtenir une progressivité de l'effort appliqué, la progressivité interne d'une commande d'embrayage n'est en effet pas souhaitée.

Le coupleur conique étant ouvert par défaut, sa mise en action consiste à lui appliquer un effort extérieur permanent pendant la synchronisation et pendant la transmission du couple moteur. Comme indiqué ci-dessus, le pilotage est donc préférentiellement réalisé en effort, et une progressivité de la montée en effort est indispensable.

Lorsque la mise en action du coupleur est mise en oeuvre par un moteur électrique, la structure de la chaîne cinématique transmettant au coupleur le couple fourni par le moteur, doit assurer la progressivité de la montée en effort.

Il y a donc un besoin d'assistance temporaire du moteur électrique d'actionnement, lors de la fermeture du coupleur.

Dans ce but, l'invention propose de doter l'actionneur électromécanique de commande du coupleur, d'un dispositif de compensation de couple apte à libérer de l'énergie pour soutenir le moteur d'actionnement, lorsqu'il se déplace à l'écart d'une position centrale de référence, et à emmagasiner de l'énergie fournie par le moteur d'entraînement, lorsqu'il rejoint cette position de référence.

Selon un mode de réalisation de l'invention, le dispositif de compensation de couple comprend un piston qui transmettant la poussée d'un ressort à une collerette fixée sur l'axe d'entrée, de manière à soutenir le moteur d'actionnement pour écarter l'axe de sortie de la position centrale.

De préférence, le piston tourne sur la collerette autour d'un axe de compensateur, et se déplace le long d'un guide pivotant sur le carter.

L'invention porte également sur une boîte de vitesses automatique comportant un tel actionneur agencé dans la boîte, de manière à actionner au moins un coupleur de vitesses avec progressivité, et un embrayage d'entrée, sans progressivité.

D'autres caractéristiques et avantages de l'invention apparaîtront clairement à la lecture de la description suivante d'un mode de réalisation particulier de celle-ci, en se reportant aux dessins annexés, sur lesquels :
- la figure 1 est une vue en coupe verticale de l'actionneur,
- les figures 2, 3 et 4 sont des vues en coupe horizontale de celui-ci,
- les figures 5A et 5B sont deux coupes orthogonales du dispositif vis écrou, d'entrée de mouvement,
- les figures 6A et 6B sont deux vues en coupe du dispositif de compensation de couple, en position de repos et de travail, et
- les figures 7 et 8 montrent la transmission du mouvement avec, et sans, progressivité.

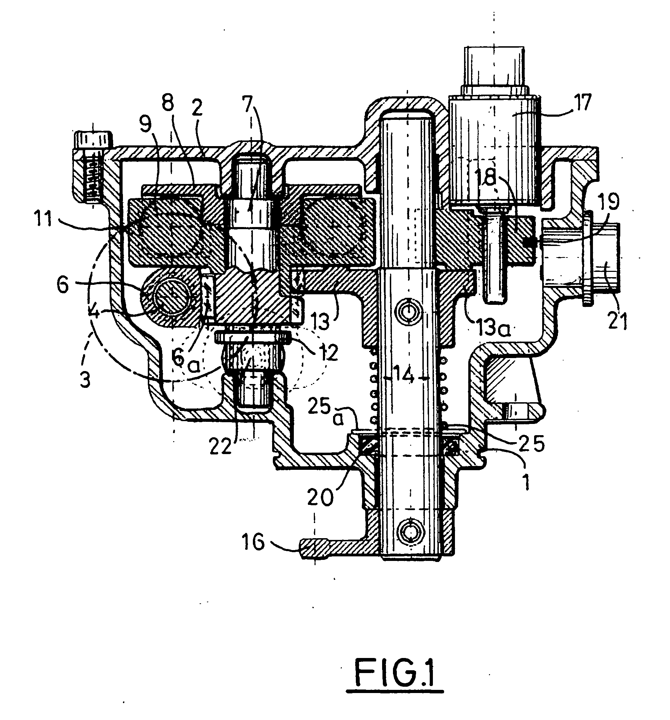

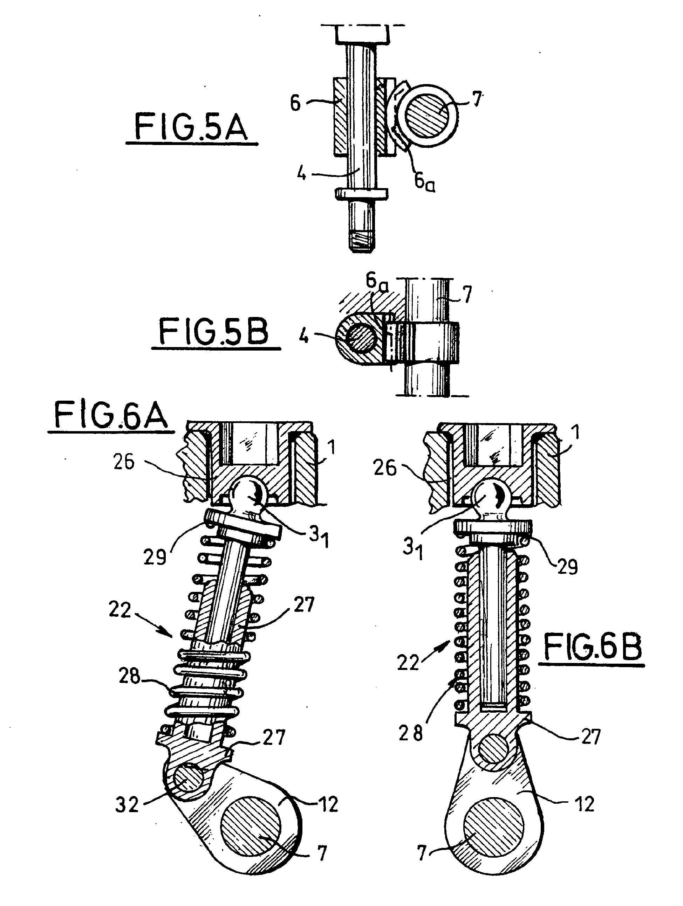

La figure 1 montre les principaux éléments de l'actionneur. Celui-ci est logé dans un carter 1, qui est fermé par un couvercle 2. Un moteur d'actionnement 3 entraîne une vis d'entrée 4, sur laquelle est immobilisée en rotation un écrou crémaillère 6, qui se déplace en translation sur celle-ci. Sa denture 6a sert de crémaillère à la denture 7a de l'axe d'entrée 7, qui est donc entraîné en rotation à partir du moteur 3 par l'intermédiaire de la vis 4 et de l'écrou 6. Ce mécanisme est détaillé sur la figure 5.

L'axe d'entrée 7 porte un flasque d'entrée 8, qui est relié par un ensemble de ressorts de progressivité 9, à un flasque de sortie 11. Il porte également une collerette d'entraînement 12 d'un dispositif de compensation d'effort, décrit plus loin.

Le flasque de sortie 11 engrène avec un secteur d'entraînement 13, de l'axe de sortie (de passage) 14 pour commander des coupleurs ou un embrayage d'entrée selon sa position en hauteur. Cet engrènement permet de réduire la vitesse de rotation, en apportant une multiplication complémentaire du couple. Elle permet au doigt de sortie d'atteindre un niveau d'effort élevé. L'axe de sortie 14 porte à son extrémité un doigt d'entraînement 16, par exemple d'un crabot de fourchette de commande interne de boîte de vitesses ou d'un embrayage.

Sur la figure 1, le doigt d'actionnement 16 et l'axe de sortie 14, sont en position haute. Dans cette position, la chaîne cinématique reliant le moteur d'actionnement 3, à l'organe d'actionnement 16, inclut des moyens de progressivité 9, disposés en amont de l'étage de réduction 11, 13.

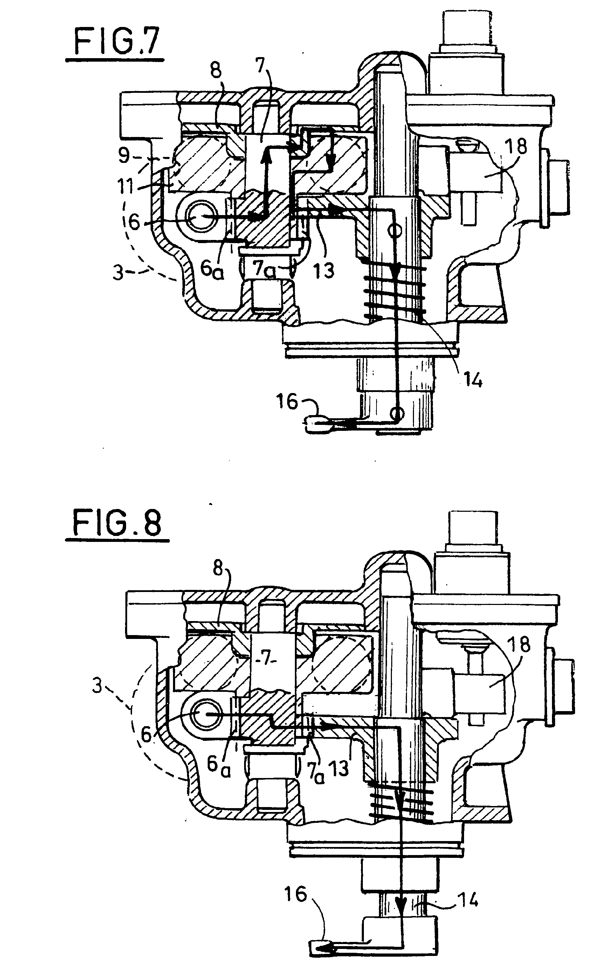

La figure 1 montre par ailleurs un moteur de sélection 17, apte à déplacer l'axe de sortie 14 entre sa position haute (figures 1 et 7), et sa position basse (figure 8). Le moteur 17 est associé à une noix de sélection 18 déplaçant en translation l'axe de sortie 14, entre ses deux positions extrêmes. La noix 18 porte un aimant 19, dont la position est repérée par un capteur de sélection 21 fixé sur le carter 1.

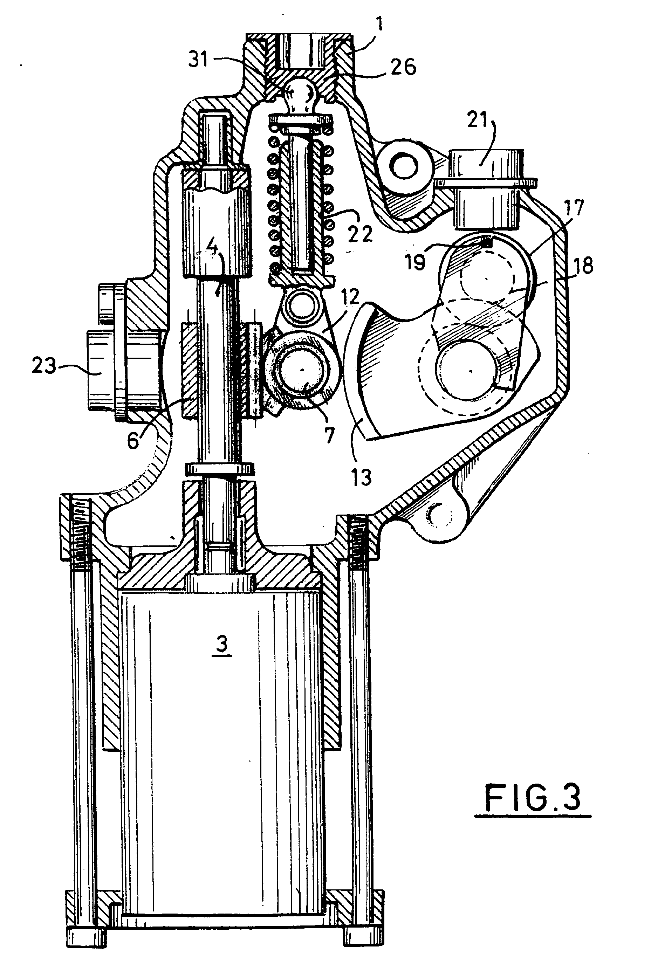

Enfin, la figure 1 montre aussi les éléments suivants : un compensateur 22, (appartenant à un dispositif de compensation d'efforts mieux décrit sur la figure 3), qui est relié à l'axe de sortie 14, par la collerette 12, un ressort de rappel 25 de l'axe 14 vers le haut, qui prend appui à cet effet sur une rondelle 25a, et un joint d'étanchéité 20.

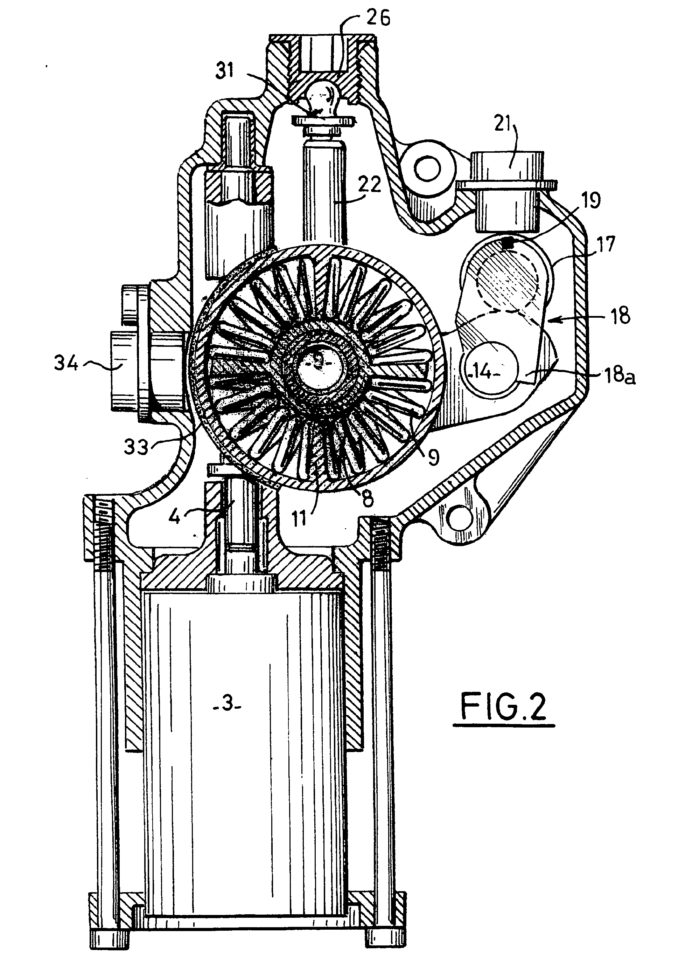

En se reportant à la figure 2, on retrouve les éléments du mécanisme de sélection décrit ci-dessus, ainsi que le moteur d'entraînement 3, la vis 4, l'axe d'entrée 7, le flasque d'entrée 8, les ressorts 9, et le flasque de sortie 11. On voit également une cible 33 sur le flasque de sortie 11, associée à un capteur de rotation 34 du doigt 16, et certains éléments du dispositif de compensation d'efforts, tels que le compensateur 22, et son bouchon de montage et de précharge 26.

La figure 3 est une vue en coupe horizontale de l'actionneur montrant les éléments interne au repos (ou position neutre) sans les flasques ni les ressorts de progressivité. En revanche, on voit la collerette 12, le secteur d'entraînement denté 13 de l'axe 14, et le compensateur 22.

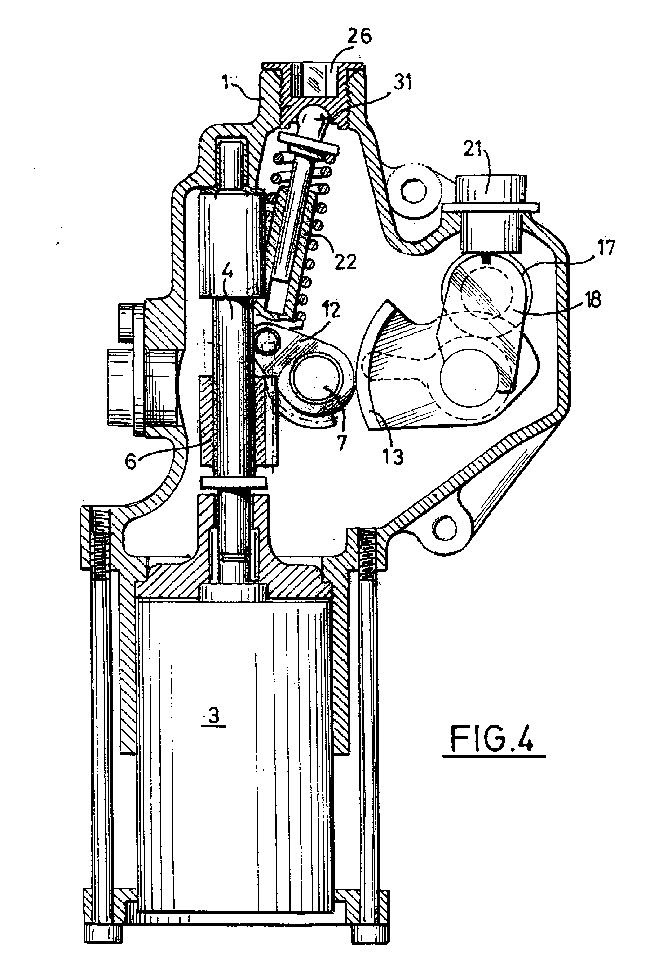

Sur la figure 4, on voit les mêmes éléments que sur la figure 3, mais en en position travail. Le compensateur 22 est en action. Il a pivoté à l'écart de sa position de la figure 2. L'écrou crémaillère 6 est en position inférieure extrême, le long de la vis 4.

L'entrée du mouvement dans l'actionneur à partir du moteur d'actionnement, est expliquée sur la figure 5. Cette figure montre la vis 4, qui reçoit le mouvement du moteur d'actionnement 3, et entraîne l'axe d'entrée 7, par l'intermédiaire de l'écrou crémaillère 6. Comme indiqué plus haut, l'écrou 6, qui est immobilisé en rotation, se déplace le long de la vis 4, en entraînant en rotation l'axe d'entrée 7. Le mouvement rotatif de la vis est ainsi transformé successivement en un déplacement linéaire de l'écrou, puis à nouveau en rotation, pour faire tourner l'axe d'entrée 7.

Le compensateur 22 appartient à un dispositif de compensation d'effort, mis en évidence sur les figures 2, 3, 4, et isolé sur les figures 6A et 6B. Ce dispositif est composé d'un piston 27, d'un ressort 28, et d'un guide 29 portant une rotule 31, qui prend appui sur un « bouchon rotule », 26 vissé dans le carter 1. La rotule 31 pivote sur le carter 1 de l'actionneur. Le piston 27 est lié à l'axe d'entrée 7 par un axe de compensateur 32 qui lui est parallèle, et qui est fixé sur la collerette 12. Le piston 27 tourne sur la collerette 12 autour de l'axe de compensateur 32, et se déplace le long du guide 29, qui pivote sur le carter.

Le piston 27 transmet la poussée du ressort 28 à l'axe d'entrée 7, de manière variable : la poussée est nulle en position neutre, croissante jusqu'à une certaine rotation, puis décroissante. Il soutient ainsi le moteur d'actionnement pour écarter l'axe de sortie de sa position centrale. Le piston 27 est aligné sur la collerette 12 et sur l'axe d'entrée 7, dans sa position centrale, et l'action du dispositif de compensation sur cet axe est nulle dans cette position.

Le couple (ou l'énergie) fourni par le dispositif de compensation dans le sens de rotation s'écartant du neutre (figure 6B) jusqu'à une certaine valeur angulaire, vient en soutien au moteur d'actionnement 3. Cette énergie est restituée par le moteur 3 lors du retour au neutre. Le dispositif de compensation de couple (ou d'efforts), fonctionne de manière identique dans les deux directions opposées à l'écart du neutre (figures 3 et 6B), vers les positions de travail (figures 4 et 6A). Il est apte à libérer de l'énergie pour soutenir le moteur d'actionnement 3 lorsqu'il se déplace à l'écart de sa position centrale de référence, et à emmagasiner de l'énergie fournie par le moteur d'entraînement lorsqu'il rejoint cette position de référence.

En résumé, l'actionneur illustré par les figures, est composé, des principaux sous ensembles suivants :
- un mécanisme de transformation de mouvement à vis et à engrenages,
- un dispositif de compensation de couple,
- un moteur électrique d'actionnement de passage,
- des capteurs de déplacements en sélection et passage du doigt de sortie,
- un couvercle, qui referme le carter, soutient le mécanisme de transformation de mouvement à vis et à engrenages, et supporte le moteur électrique de sélection.

Le mécanisme de réalisation du mouvement dit « de passage » présente un « niveau d'entrée », un « niveau intermédiaire » de transformation de mouvement, un étage de réduction et un ensemble de progressivité.

Le « niveau d'entrée » transforme le mouvement de rotation (couple) en mouvement linéaire (poussée axiale). Il est constitué de la vis 4 et de l'écrou 6; cet étage procure une forte démultiplication et surtout un caractère irréversible à la transmission, c'est-à-dire une stabilité dans toutes les positions, sans consommer d'énergie en dehors des phases de changement d'état.

Le niveau intermédiaire de transformation, correspond à la transformation du mouvement linéaire de l'écrou 6 avec ses dents latérales 6a formant une crémaillère) à la denture 7a de l'axe d'entrée 7. Ces deux premiers niveaux apportent un taux multiplicateur de couple du moteur d'entrée très élevé (de l'ordre de 10 à 12 fois).

L'ensemble de progressivité est centré sur l'axe d'entrée 7. Il est constitué du premier flasque 8 entraîné par l'axe d'entrée 7, du second flasque 11, et des ressorts courbes 9 intercalés entre les deux flasques 8, 11.

La vitesse du mouvement est réduite entre les axes d'entrée et de sortie par un étage de réduction 11, 13 entre la couronne de sortie 11 de l'axe d'entrée et le secteur denté 13. Cet étage de réduction, entre l'axe d'entrée 7 (relié au moteur d'entraînement 3) et l'axe de sortie 14, est effectif dans les deux modes de fonctionnement décrits.

La sélection des positions de fonctionnement du doigt d'actionnement est assurée par le mécanisme de sélection, composé :
- du moteur électrique de sélection 17 (avec un axe fileté) porté par le couvercle 2,
- de la noix 18 comportant un trou fileté coopérant avec l'axe du moteur et deux excroissances entourant partiellement l'axe de sortie 14, qui la bloquent en rotation,
- de l'excroissance transversale 13a (du secteur denté 13 porté par l'axe de sortie 14 dans sa partie centrale) sur laquelle la noix 18 applique sa poussée (imposée par son déplacement le long de l'axe fileté du moteur 17), pour déplacer verticalement vers le bas l'axe de sortie 14, et
- du ressort de rappel 25 qui prend appui sur la rondelle 25a, pour repousser vers le haut l'axe de sortie 14, et le maintenir en contact avec la noix 18.

Les déplacements du doigt de sortie 16 en sélection sont contrôlés par un aimant 19, porté par la noix de sélection 18. L'aimant 19 coopère avec des cellules hall, appartenant au capteur 21 supporté par le carter 1. Dans le cadre de l'invention, on peut notamment prévoir autant de cellules, que de positions de sélection (deux positions, dans le mode de réalisation présenté).

Le contrôle des déplacements angulaires du doigt 16, peut par exemple être assuré par la cible 33 portée par le flasque de sortie 11, et le capteur adéquat 34 supporté par le carter 1. L'implantation de la cible 33 sur le flasque 11, permet de bénéficier de la multiplication du mouvement par la denture de sortie, et d'accroître ainsi le niveau de précision et de résolution du système de contrôle.

La chaîne de transmission d'effort (ou du couple d'entraînement) dans le premier mode, est illustrée sur la figure 7. Le moteur 3 entraîne la vis 6. L'écrou crémaillère 6, qui est immobilisé en rotation, se déplace le long de celle-ci. Il porte une denture qui fait crémaillère sur la denture de axe d'entrée 7. Le flasque d'entrée 8, solidaire de l'axe d'entrée 7, transmet les efforts aux ressorts de progressivité 9, reliant le flasque d'entrée 8, au flasque de sortie 11. La denture de ce dernier, attaque une denture liée à l'axe de sortie 14. Celui-ci déplace en rotation le doigt d'entraînement 16.

Avec la progressivité, lorsque le doigt 16 rencontre son obstacle de fin de course bloquant l'axe et le flasque de sortie 11 en rotation, le flasque 8 d'entrée peut continuer sa rotation en comprimant les ressorts 9. A mesure de la compression des ressorts, le couple transmis à l'axe de sortie s'élève progressivement en fonction de la position angulaire relative des ressorts 9.

Sur la figure 8, la transmission du mouvement est réalisée sans les ressorts internes de progressivité. Le doigt d'actionnement 16 est en position basse. La chaîne de transmission d'efforts (ou du couple d'entraînement) est la suivante. Le moteur 3 entraîne toujours la vis 4, qui déplace en translation sur elle-même, l'écrou crémaillère 6. La crémaillère 6a fait tourner la denture de axe d'entrée 7, qui coopère cette fois directement avec la denture 7a, portée par l'axe de sortie, entraînant en rotation l'axe de sortie 14, et le doigt d'entraînement 16 fixé sur celui-ci.

Sans progressivité (figure 8), lorsque le doigt rencontre son obstacle de fin de course bloquant l'axe de sortie, le flasque d'entrée (ainsi que le moteur), sont bloqués.

En conclusion, l'actionneur décrit ci-dessus dispose de deux modes de fonctionnement principaux : un mode avec progressivité interne apte à piloter en effort le déplacement d'un organe, et un mode sans progressivité interne, convenant pour un pilotage, ou un asservissement, en position.

L'actionneur peut présenter deux, ou un nombre supérieur de positions, dans lesquelles la chaîne cinématique reliant le moteur d'actionnement à l'organe d'actionnement, inclut ou non les moyens de progressivité disposés en amont de l'étage de réduction.

Dans le mode de réalisation non limitatif de l'invention, illustré par les figures, l'actionneur ne présente que deux positions de fonctionnement. La première position convient pour mettre en action un ou plusieurs coupleurs coniques auto-assistés, alors que la deuxième position sera utilisée par exemple pour mettre en action un embrayage, tel qu'un embrayage monodisque sec. Le doigt d'entraînement peut ainsi commander des coupleurs de passage de vitesses dans la première position, et un embrayage d'entrée de la boîte de vitesse dans la deuxième. Toutefois, sans sortir du cadre de l'invention, l'actionneur peut disposer d'un nombre plus élevé de positions de fonctionnement, fonction par exemple, du nombre de coupleurs de la boîte.

De manière générale des coupleurs de passage sont avantageusement commandés au travers de la chaîne cinématique incluant les moyens de progressivité, alors que l'embrayage d'entrée peut être commandé au travers de la chaîne cinématique qui n'inclut pas ces moyens.

## Revendications

1. Actionneur électromécanique pour boîte de vitesses automatisée, comportant un moteur d'actionnement (3) qui commande par l'intermédiaire d'un étage de réduction (11, 13) de sa vitesse de rotation le déplacement d'un organe d'actionnement (16) de plusieurs organes internes de la boîte de vitesse, et des moyens de sélection (17, 18) aptes à positionner l'organe d'actionnement (16) dans plusieurs positions définissant deux modes de fonctionnement de l'actionneur où celui-ci commande respectivement des coupleurs de passage de vitesses ou un embrayage d'entrée, **caractérisé en ce qu'**il comporte un dispositif de compensation de couple (22, 29, 31) apte à libérer de l'énergie pour soutenir le moteur d'actionnement (3) lorsqu'il se déplace à l'écart d'une position centrale de référence, et à emmagasiner de l'énergie fournie par le moteur d'entraînement lorsqu'il rejoint cette position de référence.

2. Actionneur électromagnétique selon la revendication 1, **caractérisé en ce que** le dispositif de compensation de couple comprend un piston (27) transmettant la poussée d'un ressort (28) à une collerette (12) fixée sur l'axe d'entrée (7), de manière à soutenir le moteur d'actionnement pour écarter l'axe de sortie de la position centrale.

3. Actionneur électromagnétique selon la revendication 2, **caractérisé en ce que** le piston (27) tourne sur la collerette (12) autour d'un axe De compensateur (32) et se déplace le long d'un guide (29) pivotant sur le carter.

4. Actionneur électromagnétique selon la revendication 3, **caractérisé en ce que** le guide (29) porte une rotule (31) pivotant sur le carter (1) de l'actionneur.

5. Actionneur électromagnétique selon la revendication 4, **caractérisé en ce que** la rotule 31 du guide 29 prend appui sur un bouchon (32) vissé dans le carter (1).

6. Actionneur selon la revendication 3, 4 ou 5, **caractérisé en ce que**, le piston (27) est aligné sur la collerette (12) et sur l'axe d'entrée (7), dans sa position centrale.

7. Actionneur électromagnétique selon l'une des revendications précédentes, **caractérisé en ce que** l'action du dispositif de compensation sur l'axe d'entrée (7) est nulle dans sa position centrale.

## Claims

1. Electromechanical actuator for automatic gearbox comprising an actuating motor (3) which controls, via a reduction stage (11, 13) of its rotation speed, the movement of a member (16) for actuating several internal members of the gearbox, and selection means (17, 18) capable of positioning the actuating member (16) in several positions defining two modes of operation of the actuator in which the latter controls respectively gear-change couplers or an input clutch, **characterized in that** it comprises a torque-compensation device (22, 29, 31) capable of releasing energy for sustaining the actuating motor (3) when it moves away from a central reference position, and of storing the energy supplied by the drive motor when it returns to this reference position.

2. Electromechanical actuator according to Claim 1, **characterized in that** the torque-compensation device comprises a piston (27) transmitting the thrust of a spring (28) to a collar (12) attached to the input shaft (7) so as to sustain the actuating motor in order to move the output shaft away from the central position.

3. Electromechanical actuator according to Claim 2, **characterized in that** the piston (27) turns on the collar (12) about a compensating shaft De (32) and moves along a guide (29) pivoting on the casing.

4. Electromechanical actuator according to Claim 3, **characterized in that** the guide (29) supports a swivel joint (31) pivoting on the casing (1) of the actuator.

5. Electromechanical actuator according to Claim 4, **characterized in that** the swivel joint (31) of the guide (29) rests on a stopper (32) screwed into the casing (1).

6. Actuator according to Claim 3, 4 or 5, **characterized in that** the piston (27) is aligned on the collar (12) and on the input shaft (7) in its central position.

7. Electromechanical actuator according to one of the preceding claims, **characterized in that** the action of the compensation device on the input shaft (7) is zero in its central position.

## Patentansprüche

1. Elektromechanisches Stellglied für ein Automatikgetriebe, umfassend einen Betätigungsmotor (3), der mittels einer Untersetzungsstufe (11, 13) seiner Drehzahl die Bewegung eines Glieds (16) zur Betätigung mehrerer innerer Glieder des Getriebes aktiviert, und Wählmittel (17, 18), die das Betätigungsglied (16) in mehrere Positionen positionieren können, welche zwei Funktionsmodi des Stellglieds definieren, in denen dieses Gangwechselkoppler bzw. eine Eingangskupplung betätigt, **dadurch gekennzeichnet, dass** es eine Drehmomentausgleichsvorrichtung (22, 29, 31) aufweist, die Energie freisetzen kann, um den Betätigungsmotor (3) zu unterstützen, wenn dieser sich von einer mittleren Bezugsposition weg bewegt, und die von dem Antriebsmotor gelieferte Energie, wenn er in diese Bezugsposition zurückkehrt, speichern kann.

2. Elektromechanisches Stellglied nach Anspruch 1, **dadurch gekennzeichnet, dass** die Drehmomentausgleichsvorrichtung einen Kolben (27) aufweist, der die Schubkraft einer Feder (28) auf einen an der Eingangsachse (7) befestigten Flansch (12) überträgt, um den Betätigungsmotor zu unterstützen, um die Ausgangsachse von der mittleren Position weg zu bewegen.

3. Elektromechanisches Stellglied nach Anspruch 2, **dadurch gekennzeichnet, dass** sich der Kolben (27) am Flansch (12) um eine Ausgleichsachse De (32) dreht und sich entlang einer am Gehäuse schwenkenden Führung (29) bewegt.

4. Elektromechanisches Stellglied nach Anspruch 3, **dadurch gekennzeichnet, dass** die Führung (29) ein Kugelgelenk (31) trägt, das an dem Gehäuse (1) des Stellglieds schwenkt.

5. Elektromechanisches Stellglied nach Anspruch 4, **dadurch gekennzeichnet, dass** das Kugelgelenk (31) der Führung (29) an einem in das Gehäuse (1) geschraubten Verschluss (32) anliegt.

6. Stellglied nach Anspruch 3, 4 oder 5, **dadurch gekennzeichnet, dass** der Kolben (27) in seiner mittleren Position auf den Flansch (12) und auf die Eingangsachse (7) ausgerichtet ist.

7. Elektromechanisches Stellglied nach einem der vorhergehenden Ansprüche, **dadurch gekennzeichnet, dass** die Wirkung der Ausgleichsvorrichtung auf die Eingangsachse (7) in ihrer mittleren Position null ist.
